# EUROPEAN PATENT APPLICATION

(11) **EP 3 445 129 A1**
(43) Date of publication of application: **20.02.2019**
(21) Application number: 17852366.8
(22) Date of filing: 20.09.2017
(51) Int. Cl.: H04W 76/10

(54) **METHOD, DEVICE, SYSTEM AND COMPUTER READABLE STORAGE MEDIUM FOR DATA TRANSMISSION**

(30) Priority: 20.09.2016 CN 201610835485
(71) Applicant: ZTE Corporation, Shenzhen, Guangdong 518057 (CN)
(72) Inventor: YU, Yuanfang, Shenzhen Guangdong 518057 (CN); DU, Zhongda, Shenzhen Guangdong 518057 (CN); SHA, Xiubin, Shenzhen Guangdong 518057 (CN); DAI, Qian, Shenzhen Guangdong 518057 (CN); LU, Ting, Shenzhen Guangdong 518057 (CN)
(74) Representative: Brevalex
(86) International application number: PCT/CN2017/102430
(87) International publication number: WO 2018/054298

(57) **Abstract**

A method, device, system and computer readable storage medium for data transmission are disclosed herein. The method comprises: a terminal transmitting a radio connection reestablishment request message to a network side device; and the terminal transmitting, according to a radio connection reestablishment message received from the network side device, a radio connection reestablishment completion message to the network side device, in which the radio connection reestablishment completion message, the radio connection reestablishment request message, and the radio connection reestablishment message satisfy at least one of the following: the radio connection reestablishment completion message comprises uplink data; the radio connection reestablishment request message comprises first security information; and the radio connection reestablishment message comprises at least one of second security information and indication information indicating that the second security information is invalid.

## Description

### CROSS-REFERENCE TO RELATED APPLICATIONS

The present application is filed based upon and claims priority to Chinese Patent Application No. 201610835485.5, filed on September 20, 2016, the contents of which are hereby incorporated by reference in its entirety.

### TECHNICAL FIELD

The disclosure relates to the field of communication, and particularly to a method, device and system and a computer-readable storage medium for data transmission.

### BACKGROUND

Machine to Machine (M2M) communication is an important subject for present researches on the 5th-Generation (5G) mobile communication technology and is also an important application field of future wireless communication. In the subject of M2M communication, for characteristics of low-cost and low-throughput type terminals, a research subsidiary subject of Narrow Band-Internet of Things (NB-IoT) is proposed: low-throughput wireless communication service is provided for a low-cost NB-IoT terminal within a 200KHz frequency band.

An NB-IoT system mainly considers a scenario which supports an ultralow bandwidth, small data packets, deep coverage, delay tolerance and an ultralong standby time. At present, the NB-IoT system is constructed on the basis of a Long Term Evolution (LTE) technology and an existing LTE technical system is optimized for a scenario and service features of the NB-IoT. The NB-IoT system may generally inherit an LTE architecture. However, both of an air interface protocol stack and a core network may be changed to different extents. For example, since supported service types are relatively undiversified, the air interface protocol stack may be greatly simplified in a Media Access Control (MAC) layer. For meeting a deep coverage requirement, a more reliable mechanism is required to be considered for data transmission, for example, more repeated transmitting for ensuring reception. For meeting an ultralong standby time requirement (more than ten years), a radio connection processing process (connection establishment, connection reconfiguration and the like) is simplified.

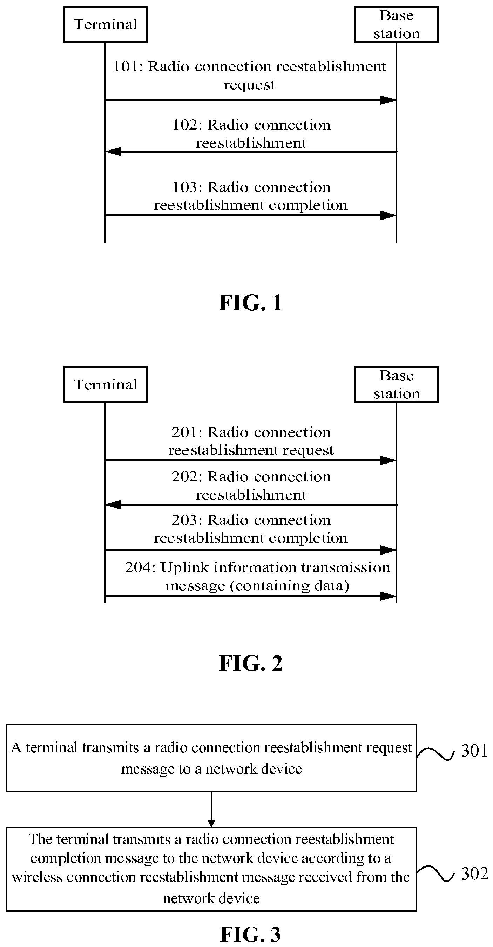

FIG. 1 is a flowchart of radio connection establishment in the LTE system according to a related art. As shown in FIG. 1, in 101, a terminal transmits a radio connection reestablishment request message to a base station. In 102, the base station transmits a radio connection reestablishment message to the terminal. In 103, the terminal transmits a radio connection reestablishment completion message to the base station. In LTE, a radio connection reestablishment operation is executed for recovery of a Signaling Radio Bearer 1 (SRB1), security reactivation and configuration of a primary cell. The specific contents may refer to the Third Generation Partnership Project (3GPP) TS36.331 protocol. Air interface signaling of a radio link (for example, radio connection establishment completion signaling and radio connection reestablishment completion signaling) may be transmitted through the SRB1.

In small data transmission wireless communication systems represented by an NB-IoT system (for example, these systems may require different system bandwidths, some bandwidths are only 200k and some may reach 1.4M and the like; and however, they have similar service requirements), although a signaling processing process for a radio connection is expected to be simplified, a reestablishment process of the radio connection is considered to be beneficial and a scenario of triggering reestablishment of the radio connection still exists in the small data transmission wireless communication systems represented by the NB-IoT.

FIG. 2 is a flowchart of recovering data transmission by reusing a radio connection establishment operation in the LTE system according to the related art. As shown in FIG. 2, 201∼203 are the same as 101∼103. In 204, the terminal transmits an uplink information transmission message carrying data to the base station to implement data transmission. However, in consideration of a power-saving requirement of an NB-IoT terminal (the terminal is usually required to support a standby time of more than ten years), power consumption of the terminal during message transmitting is far higher than that during reception and standby. Therefore, transmitting of the uplink information transmission message may increase the power consumption of the terminal and reduce the standby time of the terminal to a certain extent. Moreover, when data transmission is recovered through the radio connection reestablishment operation, fairness in resource use is also required to be considered to achieve optimal performance of the whole network.

In related processing, a radio connection reestablishment operation may be executed only after Access Stratum (AS) security is activated. However, a control-plane data transmission solution (specifically referring to 3GPP TS36.331, data is transmitted through a control-plane bearer and no data-plane bearer is established. For example, no Data Radio Bearer (DRB) but an SRB is established for an air interface) only supports use of a non-AS for security operations and does not support use of the access stratum for security operations. Therefore, in 3GPP Release 13 (R13), for an Internet of things system using a control-plane data transmission solution, no radio connection reestablishment operation may be supported. However, in a mobile scenario of a terminal, when the terminal using the control-plane data transmission solution of 3GPP R13 moves to a neighboring cell, part of data may get lost and a longer time is required to recover data transmission, which results in increase of power consumption of the terminal and decrease of a user experience. Therefore, it is necessary to consider optimization of a radio bearer using a control-plane data transmission solution and a recovery process of data transmission.

### SUMMARY

Embodiments of the disclosure provide a method for data transmission, device and system and a computer-readable storage medium.

The embodiments of the disclosure provide a method for data transmission, which may include that: a terminal transmits a radio connection reestablishment request message to a network device; and the terminal transmits a radio connection reestablishment completion message to the network device according to a radio connection reestablishment message received from the network device. The radio connection reestablishment completion message, the radio connection reestablishment request message and the radio connection reestablishment message may meet at least one of the following conditions: the radio connection reestablishment completion message carries uplink data; the radio connection reestablishment request message carries first security information; or the radio connection reestablishment message carries at least one of second security information and indication information indicating that the second security information is invalid.

In the solution, the first security information may be a short message integrity verification code; and the second security information may be a NextHoppingCount.

In the solution, the method may further include that: when the terminal activates AS security, the terminal sets the first security information according to a related AS security mechanism; or when the terminal does not activate AS security, the terminal sets the first security information to be a preset value.

In the solution, the method may further include that: when the terminal activates AS security, the terminal performs a related security operation with the second security information; and under at least one of the following conditions, the terminal ignores any operation related to the second security information: the terminal does not activate AS security, the second security information is set to be the preset value or the terminal receives the indication information indicating that the second security information is invalid.

In the solution, before the operation that the terminal transmits the radio connection reestablishment request message to the network device, the method may further include that: the terminal notifies the network device that the terminal supports a radio connection reestablishment function or an AS security function, through indication information in one of the following messages: a radio connection establishment request message, a radio connection establishment completion message, a terminal capability transmission message, an uplink information transmission message or a non-AS attachment request message.

In the solution, the terminal may use a control-plane data transmission solution.

In the solution, the radio connection reestablishment request message may carry at least one of small data transmission indication information or a cause for triggering the current radio connection reestablishment request.

In the solution, the cause may include a radio link failure and reaching of a maximum number of Radio Link Control (RLC) retransmission times.

In the solution, the radio connection reestablishment message may carry an SRB1 configuration parameter.

The embodiments of the disclosure further provide a method for data transmission, which may include that: a network device receives a radio connection reestablishment request message transmitted by a terminal; the network device transmits a radio connection reestablishment message to the terminal; and the network device receives a radio connection reestablishment completion message transmitted by the terminal according to the radio connection reestablishment message. The radio connection reestablishment completion message, the radio connection reestablishment request message and the radio connection reestablishment message may meet at least one of the following conditions: the radio connection reestablishment completion message carries uplink data; the radio connection reestablishment request message carries first security information; or the radio connection reestablishment message carries at least one of second security information and indication information indicating that the second security information is invalid.

In the solution, the first security information may be a short message integrity verification code; and the second security information may be a NextHoppingCount.

In the solution, the method may further include that: when AS security is activated between the network device and the terminal, the network device performs a related security operation with the first security information; or when AS security is not activated between the network device and the terminal, the network device ignores any operation related to the first security information.

In the solution, the method may further include that: when AS security is activated between the network device and the terminal, the network device sets the second security information; and when AS security is not activated between the network device and the terminal, the network device executes at least one of the following operations: setting the second security information to be a preset value and setting the indication information indicating that the second security information is invalid.

In the solution, a control-plane data transmission solution may be used between the network device and the terminal.

In the solution, before the operation that the network device receives the radio connection reestablishment request message, the method may further include that: the network device learns that the terminal supports a radio connection reestablishment function or supports an AS security function, through indication information in one of the following messages: a radio connection establishment request message, a radio connection establishment completion message, a terminal capability transmission message, an uplink information transmission message and a non-AS attachment request message.

In the solution, the radio connection reestablishment request message may carry at least one of small data transmission indication information or a cause for triggering the current radio connection reestablishment request.

In the solution, after the operation that the network device receives the radio connection reestablishment request message transmitted by the terminal and before the operation that the network device transmits the radio connection reestablishment message to the terminal, the method may further include at least one of the following steps.

When the radio connection reestablishment request message carries the small data transmission indication information, the network device configures a logical channel configuration parameter for the terminal according to the small data transmission indication information carried in the radio connection reestablishment request message.

When the radio connection reestablishment request message does not carry the small data transmission indication information, the network device configures the logical channel configuration parameter for the terminal according to its own condition.

When the radio connection reestablishment request message carries the cause for triggering the current radio connection reestablishment request, the network device configures an RLC configuration parameter for the terminal according to the cause, carried in the radio connection reestablishment request message, for triggering the current radio connection reestablishment request.

When the radio connection reestablishment request message does not carry the cause for triggering the current radio connection reestablishment request, the network device configures the RLC configuration parameter for the terminal according to its own condition or according to the small data transmission indication information carried in the radio connection reestablishment request message.

In the solution, the radio connection reestablishment message may carry an SRB 1 configuration parameter.

In the solution, the method may further include that: when the network device receives the radio connection establishment request message transmitted by the terminal, the network device transmits a radio connection establishment message carrying the SRB1 configuration parameter to the terminal.

In the solution, the SRB1 configuration parameter may include at least one of an SRB1 configuration parameter of a first SRB1 or an SRB1 configuration parameter of a second SRB1, the first SRB1 may be arranged to transmit signaling and the second SRB1 may be arranged to transmit data.

In the solution, the SRB1 configuration parameter may include at least one of: an SRB1 identifier, the logical channel configuration parameter or the RLC configuration parameter.

In the solution, the logical channel configuration parameter may include at least one of a priority bit rate or a token bucket size time.

In the solution, the RLC configuration parameter may include a maximum number of RLC retransmission times which is larger than 32.

The embodiments of the disclosure further provide a device for data transmission, which may be applied to a terminal and include: a first transmitting module, arranged to transmit a radio connection reestablishment request message to a network device; and a second transmitting module, arranged to transmit a radio connection reestablishment completion message to the network device according to a radio connection reestablishment message received from the network device. The radio connection reestablishment completion message, the radio connection reestablishment request message and the radio connection reestablishment message may meet at least one of the following conditions: the radio connection reestablishment completion message carries uplink data; the radio connection reestablishment request message carries first security information; or the radio connection reestablishment message carries at least one of second security information and indication information indicating that the second security information is invalid.

In the solution, the first security information may be a short message integrity verification code; and the second security information may be a NextHoppingCount.

In the solution, the device may further include: a first setting module, arranged to, when the terminal activates AS security, set the first security information according to a related AS security mechanism or, when the terminal does not activate AS security, set the first security information to be a preset value.

In the solution, the device may further include: a first processing module, arranged to, when the terminal activates AS security, perform a related security operation with the second security information, or, in at least one of the following cases, ignore any operation related to the second security information: the terminal does not activate AS security, the second security information is set to be the preset value or the terminal receives the indication information indicating that the second security information is invalid.

In the solution, the device may further include: a notification module, arranged to, before the first transmitting module transmits the radio connection reestablishment request message to the network device, notify the network device that the terminal supports a radio connection reestablishment function or an AS security function, through indication information in one of the following messages: a radio connection establishment request message, a radio connection establishment completion message, a terminal capability transmission message, an uplink information transmission message and a non-AS attachment request message.

In the solution, the radio connection reestablishment request message may carry at least one of small data transmission indication information or a cause for triggering the current radio connection reestablishment request.

In the solution, the radio connection reestablishment message may carry an SRB1 configuration parameter.

The embodiments of the disclosure further provide a device for data transmission, which may be applied to a network device and include: a first receiving module, arranged to receive a radio connection reestablishment request message transmitted by a terminal; a third transmitting module, arranged to transmit a radio connection reestablishment message to the terminal; and a second receiving module, arranged to receive a radio connection reestablishment completion message transmitted by the terminal according to the radio connection reestablishment message. The radio connection reestablishment completion message, the radio connection reestablishment request message and the radio connection reestablishment message may meet at least one of the following conditions: the radio connection reestablishment completion message carries uplink data; the radio connection reestablishment request message carries first security information; or the radio connection reestablishment message carries at least one of second security information and indication information indicating that the second security information is invalid.

In the solution, the first security information may be a short message integrity verification code; and the second security information may be a NextHoppingCount.

In the solution, the device may further include: a second processing module, arranged to, when AS security is activated between the network device and the terminal, perform a related operation with the first security information, or when AS security is not activated between the network device and the terminal, ignore any operation related to the first security information.

In the solution, the device may further include: a second setting module, arranged to, if AS security is activated between the network device and the terminal, set the second security information and, if AS security is not activated between the network device and the terminal, execute at least one of the following operations: setting the second security information to be a preset value and setting the indication information indicating that the second security information is invalid.

In the solution, the device may further include: a learning module, arranged to, before the first receiving module receives the radio connection reestablishment request message, learn that the terminal supports a radio connection reestablishment function or supports an AS security function, through indication information in one of the following messages: a radio connection establishment request message, a radio connection establishment completion message, a terminal capability transmission message, an uplink information transmission message and a non-AS attachment request message.

In the solution, the radio connection reestablishment request message may carry at least one of small data transmission indication information or a cause for triggering the current radio connection reestablishment request.

In the solution, the radio connection reestablishment message may carry an SRB1 configuration parameter.

The embodiments of the disclosure further provide a method for data transmission, which may include that: a terminal transmits a radio connection reestablishment request message to a network device; the network device transmits a radio connection reestablishment message to the terminal according to the radio connection reestablishment request message; and the terminal transmits a radio connection reestablishment completion message to the network device according to the radio connection reestablishment message. The radio connection reestablishment completion message, the radio connection reestablishment request message and the radio connection reestablishment message may meet at least one of the following conditions: the radio connection reestablishment completion message carries uplink data; the radio connection reestablishment request message carries first security information; or the radio connection reestablishment message carries at least one of second security information and indication information indicating that the second security information is invalid.

The embodiments of the disclosure further provide a system for data transmission, which may include a terminal and a network device, wherein the terminal may be arranged to transmit a radio connection reestablishment request message to the network device; the network device may be arranged to transmit a radio connection reestablishment message to the terminal according to the radio connection reestablishment request message; and the terminal may further be arranged to transmit a radio connection reestablishment completion message to the network device according to the radio connection reestablishment message. The radio connection reestablishment completion message, the radio connection reestablishment request message and the radio connection reestablishment message may meet at least one of the following conditions: the radio connection reestablishment completion message carries uplink data; the radio connection reestablishment request message carries first security information; or the radio connection reestablishment message carries at least one of second security information and indication information indicating that the second security information is invalid.

The embodiments of the disclosure further provide a computer-readable storage medium, which stores computer-executable instructions, the computer-executable instructions being executed to implement the method for data transmission for a terminal side.

The embodiments of the disclosure further provide a computer-readable storage medium, which stores a computer-executable instruction, the computer-executable instruction being executed to implement the method for data transmission for a network side.

In the embodiments of the disclosure, the terminal implements rapid recovery of data transmission through radio connection reestablishment during a radio connection reestablishment operation. If there is uplink data to be transmitted, the terminal may carry the uplink data in the radio connection reestablishment completion message for transmitting to the network device.

Moreover, the network device configures the logical channel configuration parameter and the RLC configuration parameter for the terminal according to the small data transmission indication information. Therefore, when data transmission is recovered through the radio connection reestablishment operation, fairness in resource use is also ensured to further achieve optimal performance of the whole network.

### BRIEF DESCRIPTION OF DRAWINGS

FIG. 1 is a flowchart of radio connection establishment in the LTE system according to a related art.
FIG. 2 is a flowchart of recovering data transmission by reusing a radio connection establishment operation in the LTE system according to the related art.
FIG. 3 is a flowchart of a method for data transmission according to an embodiment of the disclosure.
FIG. 4 is another flowchart of a method for data transmission according to an embodiment of the disclosure.
FIG. 5 is a flowchart of a method for data transmission according to a specific embodiment of the disclosure.
FIG. 6 is a flowchart of another method for data transmission according to a specific embodiment of the disclosure.
FIG. 7 is a schematic diagram of a system for data transmission according to an embodiment of the disclosure.

### DETAILED DESCRIPTION

The embodiments of the disclosure will be described below in combination with the drawings in detail. It is to be understood that the embodiments described below are only adopted to describe and explain the application and not intended to limit the application.

FIG. 3 is a flowchart of a method for data transmission according to an embodiment of the disclosure. As shown in FIG. 3, the method for data transmission provided by the embodiment includes the following steps.

In 301, a terminal transmits a radio connection reestablishment request message to a network device.

In 302, the terminal transmits a radio connection reestablishment completion message to the network device according to a radio connection reestablishment message received from the network device.

In some embodiments, the radio connection reestablishment completion message may carry uplink data.

In some embodiments, the radio connection reestablishment request message carries at least one of small data transmission indication information or a cause for triggering the current radio connection reestablishment request. In some embodiments, the cause includes a radio link failure and reaching of a maximum number of RLC retransmission times.

In some embodiments, the radio connection reestablishment message carries an SRB1 configuration parameter.

For a terminal using a control-plane data transmission solution, the radio connection reestablishment request message carries first security information and the first security information is a short message integrity verification code (i.e., short MAC-I). If the terminal activates AS security, the terminal sets the first security information according to a related AS security mechanism (which may specifically refer to 3GPP TS36.331. For example, the terminal uses an AS security key, an identifier of a serving cell where a radio link failure occurs to the terminal and a Cell-Radio Network Temporary Identity (C-RNTI) of the terminal to generate the first security information). If the terminal does not activate AS security, the terminal sets the first security information to be a preset value (for example, totally 1, totally 0 or any conventional value, the preset value is unrelated to an AS security algorithm).

For the terminal using the control-plane data transmission solution, the radio connection reestablishment message carries at least one of second security information and indication information indicating that the second security information is invalid. The second security information is a NextHoppingCount. If the terminal activates AS security, the terminal performs a related security operation with the second security information (for example, for updating an AS security parameter for subsequent encryption and integrity protection and the like). If the terminal meets at least one of the following conditions, the terminal ignores any operation related to the second security information:
AS security is not activated;
the second security information is set to be the preset value (for example, totally 1, totally 0 or any conventional value, the preset value is unrelated to the AS security algorithm); and
the terminal receives the indication information indicating that the second security information is invalid.

In some embodiments, for the terminal using the control-plane data transmission solution, before the terminal transmits a radio connection reestablishment request, the method further includes that: the terminal notifies the network device that the terminal supports a radio connection reestablishment function or an AS security function. The terminal may notify the network device through indication information in one of the following messages: a wireless establishment request message, a radio connection establishment completion message, a terminal capability transmission message, an uplink information transmission message and a non-AS attachment request message (the message is transmitted to a core network device through a non-AS message and a Mobility Management Entity (MME) may transmit the message to a base station device through an S1 interface).

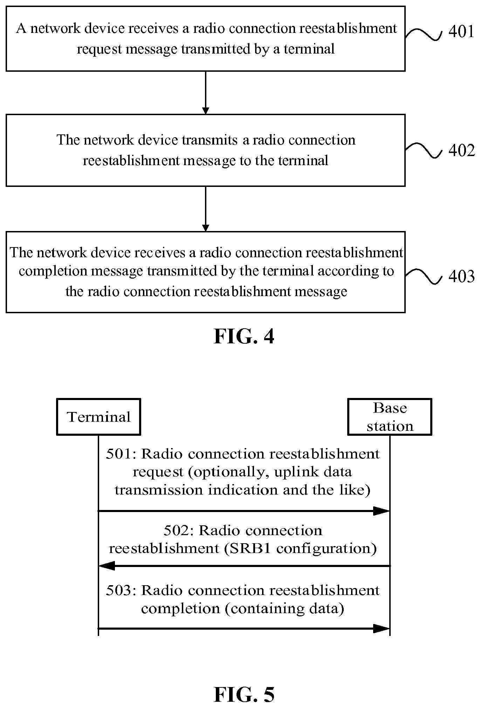

FIG. 4 is another flowchart of a method for data transmission according to an embodiment of the disclosure. As shown in FIG. 4, the method for data transmission provided by the embodiment includes the following steps.

In 401, a network device receives a radio connection reestablishment request message transmitted by a terminal.

The radio connection reestablishment request message carries first security information and the first security information is a short message integrity verification code (i.e., short MAC-I). If a control-plane data transmission solution is used between the network device and the terminal and the terminal activates AS security, the network device performs a related security operation with the first security information (for example, security check of the terminal). If the control-plane data transmission solution is used between the network device and the terminal and the terminal does not activate AS security, the network device ignores any operation related to the first security information. The network device includes at least one of: a first network device receiving the radio connection reestablishment message transmitted by the terminal and a second network device connected with the terminal before the radio connection reestablishment request message. The first network device and the second network device may be the same or different. An operation related to a radio connection reestablishment function (including, but not limited to, related to the first security information) is completed through interface message interaction between the first network device and the second network device.

In 402, the network device transmits a radio connection reestablishment message to the terminal.

The radio connection reestablishment message carries at least one of second security information and indication information indicating that the second security information is invalid. The second security information is a NextHoppingCount. If the control-plane data transmission solution is used between the network device and the terminal and the terminal activates AS security, the network device sets the second security information. If the control-plane data transmission solution is used between the network device and the terminal and the terminal does not activate AS security, the network device executes at least one of the following operations: setting the second security information to be a preset value (for example, totally 1, totally 0 or any conventional value, the preset value is unrelated to an AS security algorithm) or setting the indication information indicating that the second security information is invalid.

In 403, the network device receives a radio connection reestablishment completion message transmitted by the terminal according to a radio connection reestablishment message.

In some embodiments, the radio connection reestablishment completion message may carry uplink data.

In some embodiments, the radio connection reestablishment request message carries at least one of small data transmission indication information or a cause for triggering the current radio connection reestablishment request.

In some embodiments, before the network device receives the radio connection reestablishment request message, the method further includes that: the network device learns that the terminal supports a radio connection reestablishment function or supports an AS security function, through indication information in one of the following messages: a radio connection establishment request message, a radio connection establishment completion message, a terminal capability transmission message, an uplink information transmission message and a non-AS attachment request message.

In some embodiments, the radio connection reestablishment message carries an SRB1 configuration parameter.

In some embodiments, the SRB1 configuration parameter includes at least one of an SRB1 configuration parameter of a first SRB1 or an SRB1 configuration parameter of a second SRB1. The first SRB1 is arranged to transmit signaling and the signaling may include at least one of non-access bearer signaling (for example, attachment and reattachment) or access bearer signaling (for example, radio connection establishment completion, radio connection release and capability query). The second SRB1 is arranged to transmit data.

In some embodiments, the SRB1 configuration parameter includes at least one of: an SRB1 identifier, a logical channel configuration parameter or an RLC configuration parameter.

The SRB1 identifier may be arranged to identify the first SRB1 and the second SRB1.

Specifically, when the SRB1 configuration parameter includes the SRB1 configuration parameter of the first SRB1, the SRB1 configuration parameter of the first SRB1 includes at least one of: an SRB1 identifier of the first SRB1, a logical channel configuration parameter of the first SRB1 or an RLC configuration parameter of the first SRB1. When the SRB1 configuration parameter includes the SRB1 configuration parameter of the second SRB1, the SRB1 configuration parameter of the second SRB1 includes at least one of: an SRB1 identifier of the second SRB1, a logical channel configuration parameter of the second SRB1 or an RLC configuration parameter of the second SRB1. When the SRB1 configuration parameter includes the SRB1 configuration parameter of the first SRB1 and the SRB1 configuration parameter of the second SRB1, there are two groups of SRB1 configuration parameters. The SRB1 configuration parameter of the first SRB1 includes at least one of: the SRB1 identifier of the first SRB1, the logical channel configuration parameter of the first SRB1 or the RLC configuration parameter of the first SRB1. When the SRB1 configuration parameter includes the SRB1 configuration parameter of the second SRB1, the SRB1 configuration parameter of the second SRB1 includes at least one of: the SRB1 identifier of the second SRB1, the logical channel configuration parameter of the second SRB1 or the RLC configuration parameter of the second SRB1.

The logical channel configuration parameter includes at least one of a priority bit rate or a token bucket size time.

Specifically, the priority bit rate is a minimum rate requirement guarantee of each logical channel. When the priority bit rate is arranged to be infinitely great, it means that only after resources needed by the logical channel are met, resources for another logical channel with a lower priority may be considered. In related LTE, control signaling is usually transmitted in an SRB1, and requirements on delay and reliability are very high. Therefore, the SRB1 has a highest priority and its resource configuration may be preferentially ensured. However, if the highest priority is adopted for resource configuration when the SRB1 is used for data transmission, real control signaling transmission reliability and fairness in resource use may be influenced because an ordinary data packet may require more resources than control signaling. Therefore, in the embodiment, a priority bit rate of a logical channel of the second SRB1 is configured not to be infinitely great (that is, the logical channel configuration parameter of the second SRB1 includes a priority bit rate of which a value is not infinitely great), to avoid influence of the ordinary data packet on real control signaling transmission.

In some embodiments, the RLC configuration parameter includes a maximum number of RLC retransmission times which is larger than 32.

In some embodiments, after 401 and before 402, the method may further include at least one of the following steps.

When the radio connection reestablishment request message carries the small data transmission indication information, the network device configures the logical channel configuration parameter for the terminal according to the small data transmission indication information carried in the radio connection reestablishment request message.

When the radio connection reestablishment request message does not carry the small data transmission indication information, the network device configures the logical channel configuration parameter for the terminal according to its own condition.

When the radio connection reestablishment request message carries the cause for triggering the current radio connection reestablishment request, the network device configures the RLC configuration parameter for the terminal according to the cause, carried in the radio connection reestablishment request message, for triggering the current radio connection reestablishment request.

When the radio connection reestablishment request message does not carry the cause for triggering the current radio connection reestablishment request, the network device configures the RLC configuration parameter for the terminal according to its own condition or according to the small data transmission indication information carried in the radio connection reestablishment request message.

In some embodiments, the method further includes that: when the network device receives the radio connection establishment request message transmitted by the terminal, the network device transmits a radio connection establishment message carrying the SRB1 configuration parameter to the terminal. Specific contents of the SRB1 configuration parameter are the same as those mentioned above and thus will not be elaborated herein.

In addition, an embodiment of the disclosure further provides a method for data transmission, which includes the following steps. A terminal transmits a radio connection reestablishment request message to a network device. The network device transmits a radio connection reestablishment message to the terminal according to the radio connection reestablishment request message. The terminal transmits a radio connection reestablishment completion message to the network device according to the radio connection reestablishment message.

The radio connection reestablishment completion message, the radio connection reestablishment request message and the radio connection reestablishment message meet at least one of the following conditions: the radio connection reestablishment completion message carries uplink data; the radio connection reestablishment request message carries first security information; or the radio connection reestablishment message carries at least one of second security information and indication information indicating that the second security information is invalid.

In some embodiments, the first security information is a short message integrity verification code and the second security information is a NextHoppingCount.

In some embodiments, the radio connection reestablishment request message carries at least one of small data transmission indication information or a cause for triggering the current radio connection reestablishment request.

In some embodiments, the radio connection reestablishment message carries an SRB1 configuration parameter.

In some embodiments, if the terminal activates AS security, the terminal sets the first security information according to a related AS security mechanism. If the terminal does not activate AS security, the terminal sets the first security information to be a preset value.

In some embodiments, if the terminal activates AS security, the terminal performs a related security operation with the second security information.

Under at least one of the following conditions, the terminal ignores any operation related to the second security information: the terminal does not activate AS security, the second security information is set to be a preset value or the terminal receives the indication information indicating that the second security information is invalid.

In some embodiments, before the terminal transmits the radio connection reestablishment request message to the network device, the method further includes that the terminal notifies the network device that the terminal supports a radio connection reestablishment function or an AS security function, through indication information in one of the following messages: a radio connection establishment request message, a radio connection establishment completion message, a terminal capability transmission message, an uplink information transmission message and a non-AS attachment request message.

In some embodiments, if AS security is activated between the network device and the terminal, the network device performs a related security operation with the first security information. If AS security is not activated between the network device and the terminal, the network device ignores any operation related to the first security information.

In some embodiments, if AS security is activated between the network device and the terminal, the network device sets the second security information. If AS security is not activated between the network device and the terminal, the network device executes at least one of the following operations: setting the second security information to be a preset value or setting the indication information indicating that the second security information is invalid.

In some embodiments, a control-plane data transmission solution is used between the network device and the terminal.

The application will be described below with specific embodiments in detail.

FIG. 5 is a flowchart of a method for data transmission according to a specific embodiment of the disclosure. As shown in FIG. 5, a network device in the embodiment is a base station. The method for data transmission provided by the embodiment includes the following steps.

In 501, a terminal transmits a radio connection reestablishment request message to the base station.

In some embodiments, the terminal uses a control-plane data transmission solution. The radio connection reestablishment request message carries first security information. The first security information is a short message integrity verification code (i.e., shortMAC-I). If the terminal activates AS security, the terminal sets the first security information according to a related AS security mechanism (which may specifically refer to 3GPP TS36.331. For example, the terminal uses an AS security key, an identifier of a serving cell where a radio link failure occurs to the terminal and a C-RNTI of the terminal to generate the first security information). If the terminal does not activate AS security, the terminal sets the first security information to be a preset value (for example, totally 1, totally 0 or any conventional value, the preset value is unrelated to an AS security algorithm).

In some embodiments, the terminal indicates that there is small data for transmission through the radio connection reestablishment request message. Specifically, the radio connection reestablishment request message carries small data transmission indication information to indicate there is small data for transmission. Or, the small data transmission indication information carried in a radio connection reestablishment message indicates that there is small data for transmission.

In some embodiments, the terminal carries a cause for triggering the current radio connection reestablishment operation in the radio connection reestablishment request message. The cause may be a radio link failure and reaching of a maximum number of RLC retransmission times.

In some embodiments, for the terminal using the control-plane data transmission solution, before the terminal transmits a radio connection reestablishment request, the method further includes that: the terminal notifies the network device that the terminal supports a radio connection reestablishment function or an AS security function. The terminal may notify the network device through indication information in one of the following messages: a wireless establishment request message, a radio connection establishment completion message, a terminal capability transmission message, an uplink information transmission message and a non-AS attachment request message (the message is transmitted to a core network device through a non-AS message and an MME may transmit the message to the base station device through an S1 interface).

In 502, the base station receives the radio connection reestablishment request message and transmits a radio connection reestablishment message carrying an SRB 1 configuration parameter to the terminal.

The SRB1 configuration parameter is encapsulated in a dedicated radio resource configuration parameter. The dedicated radio resource configuration parameter further includes another parameter related to wireless transmission.

In some embodiments, the SRB1 configuration parameter includes a logical channel configuration parameter. The logical channel configuration parameter includes one or combination of: a priority bit rate and a token bucket size time.

In some embodiments, the SRB1 configuration parameter includes an RLC configuration parameter. The RLC configuration parameter includes the maximum number of RLC retransmission times which is larger than 32.

In some embodiments, the base station configures the logical channel configuration parameter for the terminal according to the small data transmission indication information.

In some embodiments, the base station configures the RLC configuration parameter for the terminal according to a radio connection reestablishment failure cause.

In some embodiments, the control-plane data transmission solution is used between the network device and the terminal. If AS security is activated between the network device and the terminal, the network device performs a related security operation with the first security information (for example, security check of the terminal). If AS security is not activated between the network device and the terminal, the network device ignores any operation related to the first security information.

In some embodiments, the radio connection reestablishment message carries at least one of second security information and indication information indicating that the second security information is invalid. The second security information is a NextHoppingCount. If the control-plane data transmission solution is used between the network device and the terminal and the terminal activates AS security, the network device sets the second security information. If the control-plane data transmission solution is used between the network device and the terminal and the terminal does not activate AS security, the network device executes at least one of the following operations: setting the second security information to be a preset value (for example, totally 1, totally 0 or any conventional value, the preset value is unrelated to an AS security algorithm) or setting the indication information indicating that the second security information is invalid. If the terminal activates AS security, the terminal performs a related security operation with the second security information (for example, for updating an AS security parameter for subsequent encryption and integrity protection and the like). If the terminal meets at least one of the following conditions, the terminal ignores any operation related to the second security information: AS security is not activated; the second security information is set to be the preset value (for example, totally 1, totally 0 or any conventional value, the preset value is unrelated to the AS security algorithm); or the terminal receives the indication information indicating that the second security information is invalid.

In 503, the terminal carries uplink data through a radio connection reestablishment completion message for transmitting to the base station.

On the basis of the abovementioned embodiment, in a small data wireless communication system represented by an NB-IoT system, for example, in case of out of synchronism of a physical layer or reaching of a maximum number of retransmission times (this parameter is configured by radio connection signaling, and the existing maximum time of retransmission times is 32) of a higher layer (i.e., an RLC layer), radio connection reestablishment may be triggered. An SRB1 is rapidly recovered through a Radio Resource Control (RRC) reestablishment flow. That is, recovery of connection is triggered by an AS. When these system data is transmitted on the SRB1, rapidly recovering the SRB1 may allow rapid recovery of data transmission, thereby benefiting transmission of data of the exception reporting type (the data of this type has a higher requirement on delay and is usually required to be transmitted within 10 seconds, for example, a fire alarm, a flood warning and an earthquake warning). Otherwise, a terminal may be released into an idle state and then an application layer re-triggers connection establishment. Consequently, a delay may obviously be increased. If an alarm may not be timely reported, the best rescue time may be missed and higher loss may be brought.

Moreover, power consumption of the terminal during message transmitting is far higher than that during reception and standby. According to the embodiment of the disclosure, uplink message transmitting may be reduced, thereby reducing the power consumption of the terminal, prolonging a standby time of the terminal to a certain extent and further achieving longer service life of a battery of the terminal.

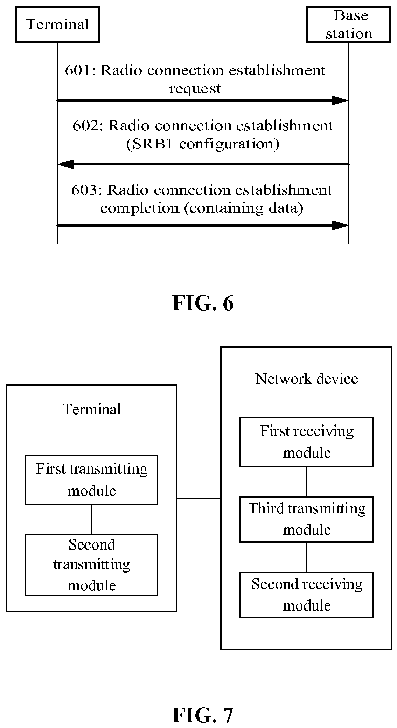

FIG. 6 is a flowchart of a method for data transmission according to another specific embodiment of the disclosure. The difference between the embodiment and the abovementioned specific embodiment is that: in the embodiment, not only may a radio connection reestablishment message carry an SRB1 configuration parameter, but also a radio connection establishment message may carry the SRB1 configuration parameter. The SRB1 configuration parameter includes at least one of an SRB1 configuration parameter of a first SRB1 or an SRB1 configuration parameter of a second SRB1.

Specifically, in 601, a terminal transmits a radio connection establishment request message to a base station. In some embodiments, the radio connection establishment request message carries small data transmission indication information. In 602, the base station transmits the radio connection establishment message carrying the SRB1 configuration parameter to the terminal. In 603, the terminal transmits a radio connection establishment completion message carrying uplink data to the base station. Specific contents of the SRB1 configuration parameter are the same as those mentioned in the abovementioned embodiment and thus will not be elaborated herein.

In some embodiments, the radio connection reestablishment request message carries first security information.

In some embodiments, the radio connection reestablishment message carries at least one of second security information and indication information indicating that the second security information is invalid.

Contents and processing flows of the first security information and the second security information are the same as those described in the abovementioned embodiment and thus will not be elaborated herein.

In addition, an embodiment of the disclosure further provides a device for data transmission, which is applied to a terminal and includes: a first transmitting module, arranged to transmit a radio connection reestablishment request message to a network device; and a second transmitting module, arranged to transmit a radio connection reestablishment completion message to the network device according to a radio connection reestablishment message received from the network device.

The radio connection reestablishment completion message, the radio connection reestablishment request message and the radio connection reestablishment message meet at least one of the following conditions: the radio connection reestablishment completion message carries uplink data; the radio connection reestablishment request message carries first security information; or the radio connection reestablishment message carries at least one of second security information and indication information indicating that the second security information is invalid.

In some embodiments, the first security information is a short message integrity verification code and the second security information is a NextHoppingCount.

In some embodiments, the device further includes: a first setting module, arranged to, if the terminal activates AS security, set the first security information according to a related AS security mechanism and, if the terminal does not activate AS security, set the first security information to be a preset value.

In some embodiments, the device further includes: a first processing module, arranged to, if the terminal activates AS security, perform a related security operation with the second security information and, under at least one of the following conditions, ignore any operation related to the second security information: the terminal does not activate AS security, the second security information is set to be the preset value or the terminal receives the indication information indicating that the second security information is invalid.

In the solution, the device further includes: a notification module, arranged to, before the first transmitting module transmits the radio connection reestablishment request message to the network device, notify the network device that the terminal supports a radio connection reestablishment function or an AS security function through indication information in one of the following messages: a radio connection establishment request message, a radio connection establishment completion message, a terminal capability transmission message, an uplink information transmission message and a non-AS attachment request message.

In some embodiments, the terminal uses a control-plane data transmission solution.

In some embodiments, the radio connection reestablishment request message carries at least one of small data transmission indication information or a cause for triggering the current radio connection reestablishment request.

In some embodiments, the radio connection reestablishment message carries an SRB1 configuration parameter.

During a practical application, the first transmitting module, the second transmitting module and the notification module may be implemented by a communication interface in the data transmission device of the terminal and the first setting module and the first processing module may be implemented by a processor in the data transmission device.

In addition, an embodiment of the disclosure further provides a device for data transmission, which is applied to a network device and includes: a first receiving module, arranged to receive a radio connection reestablishment request message transmitted by a terminal; a third transmitting module, arranged to transmit a radio connection reestablishment message to the terminal; and a second receiving module, arranged to receive a radio connection reestablishment completion message transmitted by the terminal according to the radio connection reestablishment message.

The radio connection reestablishment completion message, the radio connection reestablishment request message and the radio connection reestablishment message meet at least one of the following conditions: the radio connection reestablishment completion message carries uplink data; the radio connection reestablishment request message carries first security information; or the radio connection reestablishment message carries at least one of second security information and indication information indicating that the second security information is invalid.

In some embodiments, the first security information is a short message integrity verification code and the second security information is a NextHoppingCount.

In some embodiments, the device further includes: a second processing module, arranged to, if AS security is activated between the network device and the terminal, perform a related operation with the first security information and, if AS security is not activated between the network device and the terminal, ignore any operation related to the first security information.

In some embodiments, the device further includes: a second setting module, arranged to, if AS security is activated between the network device and the terminal, set the second security information and, if AS security is not activated between the network device and the terminal, execute at least one of the following operations: setting the second security information to be a preset value or setting the indication information indicating that the second security information is invalid.

In some embodiments, the control-plane data transmission solution is used between the network device and the terminal.

In some embodiments, the device further includes: a learning module, arranged to, before the first receiving module receives the radio connection reestablishment request message, learn that the terminal supports a radio connection reestablishment function or supports an AS security function, through indication information in one of the following messages: a radio connection establishment request message, a radio connection establishment completion message, a terminal capability transmission message, an uplink information transmission message and a non-AS attachment request message.

In some embodiments, the radio connection reestablishment request message carries at least one of small data transmission indication information or a cause for triggering the current radio connection reestablishment request.

In some embodiments, the radio connection reestablishment message carries an SRB 1 configuration parameter.

During a practical application, the first receiving module, the third transmitting module, the second receiving module and the learning module may be implemented by a communication interface in the data transmission device of the network device and the second processing module and the second setting module may be implemented by a processor in the data transmission device of the network device.

Specific processing processes of the devices are the same as those of the methods and thus will not be elaborated herein.

In addition, an embodiment of the disclosure further provides a system for data transmission, which includes a terminal and a network device. The terminal is arranged to transmit a radio connection reestablishment request message to the network device. The network device is arranged to transmit a radio connection reestablishment message to the terminal according to the radio connection reestablishment request message. The terminal is further arranged to transmit a radio connection reestablishment completion message to the network device according to the radio connection reestablishment message.

The radio connection reestablishment completion message, the radio connection reestablishment request message and the radio connection reestablishment message meet at least one of the following conditions: the radio connection reestablishment completion message carries uplink data; the radio connection reestablishment request message carries first security information; or the radio connection reestablishment message carries at least one of second security information and indication information indicating that the second security information is invalid.

In some embodiments, the first security information is a short message integrity verification code and the second security information is a NextHoppingCount.

In some embodiments, if the terminal activates AS security, the terminal sets the first security information according to a related AS security mechanism. If the terminal does not activate AS security, the terminal sets the first security information to be a preset value.

In some embodiments, if the terminal activates AS security, the terminal performs a related security operation with the second security information. Under at least one of the following conditions, the terminal ignores any operation related to the second security information: the terminal does not activate AS security, the second security information is set to be the preset value or the terminal receives the indication information indicating that the second security information is invalid.

In some embodiments, the terminal is further arranged to, before the radio connection reestablishment request message is transmitted to the network device, notify the network device that the terminal supports a radio connection reestablishment function or an AS security function through indication information in one of the following messages: a radio connection establishment request message, a radio connection establishment completion message, a terminal capability transmission message, an uplink information transmission message or a non-AS attachment request message.

In some embodiments, if AS security is activated between the network device and the terminal, the network device performs a related security operation with the first security information. If AS security is not activated between the network device and the terminal, the network device ignores any operation related to the first security information.

In some embodiments, if AS security is activated between the network device and the terminal, the network device sets the second security information. If AS security is not activated between the network device and the terminal, the network device executes at least one of the following operations: setting the second security information to be a preset value or setting the indication information indicating that the second security information is invalid.

In some embodiments, a control-plane data transmission solution is used between the network device and the terminal.

In some embodiments, the radio connection reestablishment request message carries at least one of small data transmission indication information or a cause for triggering the current radio connection reestablishment request.

In some embodiments, the radio connection reestablishment message carries an SRB 1 configuration parameter.

FIG. 7 is a schematic diagram of a system for data transmission according to an embodiment of the disclosure. As shown in FIG. 7, the system for data transmission provided by the embodiment includes a terminal and a network device. The terminal includes a first transmitting module and a second transmitting module. The network device includes a first receiving module, a second receiving module and a third transmitting module.

Specifically, the first transmitting module transmits a radio connection reestablishment request message to the network device. The first receiving module receives the radio connection reestablishment request message. The third transmitting module transmits a radio connection reestablishment message according to the radio connection reestablishment request message. The second transmitting module transmits a radio connection reestablishment completion message according to the radio connection reestablishment message. The second receiving module receives the radio connection reestablishment completion message.

In addition, specific processing flows of the system are the same as those of the methods and thus will not be elaborated herein.

During a practical application, the first transmitting module, the second transmitting module and the third transmitting module are, for example, wireless communication components with a transmitting function. The first receiving module and the second receiving module are, for example, wireless communication components with a receiving function.

From the above, in the embodiments of the disclosure, the terminal implements rapid recovery of data transmission through radio connection reestablishment during a radio connection reestablishment operation. The uplink data may be carried through a radio connection reestablishment completion message for transmitting to the base station.

An embodiment of the disclosure further provides a terminal, which includes a first wireless communication unit and a second wireless communication unit. The first wireless communication unit is connected with the second wireless communication unit. The first wireless communication unit is arranged to transmit a radio connection reestablishment request message to a network device. The second wireless communication unit is arranged to receive a radio connection reestablishment message from the network device. The first wireless communication unit is further arranged to transmit a radio connection reestablishment completion message to the network device.

The radio connection reestablishment completion message, the radio connection reestablishment request message and the radio connection reestablishment message meet at least one of the following conditions: the radio connection reestablishment completion message carries uplink data; the radio connection reestablishment request message carries first security information; or the radio connection reestablishment message carries at least one of second security information and indication information indicating that the second security information is invalid.

The first wireless communication unit is, for example, a wireless communication component with a transmitting function. The second wireless communication unit is, for example, a wireless communication component with a receiving function.

In addition, an embodiment of the disclosure further provides a computer-readable storage medium, which stores computer-executable instructions, the computer-executable instructions being executed to implement the method for data transmission for a terminal side.

In addition, an embodiment of the disclosure further provides a computer-readable storage medium, which stores computer-executable instructions, the computer-executable instructions being executed to implement the method for data transmission for a network side.

Those of ordinary skill can understand that all or part of the steps in the method may be completed by instructing related hardware (for example, a processor) through a program. The program may be stored in a computer-readable storage medium, for example, a read-only memory, a magnetic disk or an optical disk. Optionally, all or part of the steps of the embodiments may also be implemented by use of one or more integrated circuits. Correspondingly, each module/unit in the embodiments may be implemented in a hardware form, for example, its corresponding function is realized through an integrated circuit, and may also be implemented in form of software functional module, for example, its corresponding function is realized by executing a program/instructions stored in a memory through the processor. The disclosure is not limited to a combination of hardware and software in any specific form.

The above shows and describes the basic principle and main characteristics of the disclosure and advantages of the disclosure. The disclosure is not limited to the embodiments. Only the principle of the disclosure is described in the embodiments and the specification. Various variations and improvements may also be made to the disclosure without departing from the spirit and scope of the disclosure and all of these variations and improvements shall also fall within the scope of protection of the disclosure.

### INDUSTRIAL APPLICABILITY

According to the solutions provided by the embodiments of the disclosure, the terminal implements rapid recovery of data transmission through radio connection reestablishment during a radio connection reestablishment operation. If there is uplink data to be transmitted, the terminal may carry the uplink data in the radio connection reestablishment completion message for transmitting to the network device. Moreover, the network device configures the logical channel configuration parameter and the RLC configuration parameter for the terminal according to the small data transmission indication information. Therefore, when data transmission is recovered through the radio connection reestablishment operation, fairness in resource use is also ensured to further achieve optimal performance of the whole network.

## Claims

1. A method for data transmission, comprising:
transmitting, by a terminal, a radio connection reestablishment request message to a network device; and
transmitting, by the terminal, a radio connection reestablishment completion message to the network device according to a radio connection reestablishment message received from the network device,
wherein the radio connection reestablishment completion message, the radio connection reestablishment request message and the radio connection reestablishment message meet at least one of the following conditions:
the radio connection reestablishment completion message carries uplink data;
the radio connection reestablishment request message carries first security information; and
the radio connection reestablishment message carries at least one of second security information and indication information indicating that the second security information is invalid.

2. The method of claim 1, wherein the first security information is a short message integrity verification code; and the second security information is a NextHoppingCount.

3. The method of claim 1, further comprising:
when the terminal activates Access Stratum, AS, security, setting, by the terminal, the first security information according to a related AS security mechanism; or
when the terminal does not activate AS security, setting, by the terminal, the first security information to be a preset value.

4. The method of claim 1, further comprising:
when the terminal activates AS security, performing, by the terminal, a related security operation with the second security information; or
ignoring, by the terminal, any operation related to the second security information, in at least one of the following cases: the terminal does not activate AS security, the second security information is set to be a preset value, or the terminal receives the indication information indicating that the second security information is invalid.

5. The method of claim 1, before transmitting, by the terminal, the radio connection reestablishment request message to the network device, further comprising:
notifying, by the terminal, the network device that the terminal supports a radio connection reestablishment function or an AS security function, through indication information in one of the following messages:
a radio connection establishment request message, a radio connection establishment completion message, a terminal capability transmission message, an uplink information transmission message, and a non-AS attachment request message.

6. The method of any one of claims 3-5, wherein the terminal uses a control-plane data transmission solution.

7. The method of claim 1, wherein the radio connection reestablishment request message carries at least one of small data transmission indication information or a cause for triggering the current radio connection reestablishment request.

8. The method of claim 7, wherein the cause comprises a radio link failure and reaching of a maximum number of Radio Link Control, RLC, retransmission times.

9. The method of any one of claims 1 and 7-8, wherein the radio connection reestablishment message carries a Signaling Radio Bearer 1, SRB1, configuration parameter.

10. A method for data transmission, comprising:
receiving, by a network device, a radio connection reestablishment request message transmitted by a terminal;
transmitting, by the network device, a radio connection reestablishment message to the terminal; and
receiving, by the network device, a radio connection reestablishment completion message transmitted by the terminal according to a radio connection reestablishment message,
wherein the radio connection reestablishment completion message, the radio connection reestablishment request message and the radio connection reestablishment message meet at least one of the following conditions:
the radio connection reestablishment completion message carries uplink data;
the radio connection reestablishment request message carries first security information; and
the radio connection reestablishment message carries at least one of second security information and indication information indicating that the second security information is invalid.

11. The method of claim 10, wherein the first security information is a short message integrity verification code; and the second security information is a NextHoppingCount.

12. The method of claim 10, further comprising:
when Access Stratum, AS, security is activated between the network device and the terminal, performing, by the network device, a related operation with the first security information; or
when AS security is not activated between the network device and the terminal, ignoring, by the network device, any operation related to the first security information.

13. The method of claim 10, further comprising:
when AS security is activated between the network device and the terminal, setting, by the network device, the second security information; or
when AS security is not activated between the network device and the terminal, executing, by the network device, at least one of the following operations: setting the second security information to be a preset value or setting the indication information indicating that the second security information is invalid.

14. The method of any one of claims 12-13, wherein a control-plane data transmission solution is used between the network device and the terminal.

15. The method of claim 10 or 14, before receiving, by the network device, the radio connection reestablishment request message, further comprising:
learning, by the network device, that the terminal supports a radio connection reestablishment function or supports an AS security function, through indication information in one of the following messages:
a radio connection establishment request message, a radio connection establishment completion message, a terminal capability transmission message, an uplink information transmission message or a non-AS attachment request message.

16. The method of claim 10, wherein the radio connection reestablishment request message carries at least one of small data transmission indication information or a cause for triggering the current radio connection reestablishment request.

17. The method of claim 16, after receiving, by the network device, the radio connection reestablishment request message transmitted by the terminal and before transmitting, by the network device, the radio connection reestablishment message to the terminal, further comprising at least one of the following:
when the radio connection reestablishment request message carries the small data transmission indication information, configuring, by the network device, a logical channel configuration parameter for the terminal according to the small data transmission indication information carried in the radio connection reestablishment request message;
when the radio connection reestablishment request message does not carry the small data transmission indication information, configuring, by the network device, the logical channel configuration parameter for the terminal according to the network device's own condition;
when the radio connection reestablishment request message carries the cause for triggering the current radio connection reestablishment request, configuring, by the network device, a Radio Link Control, RLC, configuration parameter for the terminal according to the cause, carried in the radio connection reestablishment request message, for triggering the current radio connection reestablishment request; or
when the radio connection reestablishment request message does not carry the cause for triggering the current radio connection reestablishment request, configuring, by the network device, the RLC configuration parameter for the terminal according to the network device's own condition or according to the small data transmission indication information carried in the radio connection reestablishment request message.

18. The method of claim 10, wherein the radio connection reestablishment message carries a Signaling Radio Bearer 1, SRB1, configuration parameter.

19. The method of claim 10, further comprising: when the network device receives the radio connection establishment request message transmitted by the terminal, transmitting, by the network device, a radio connection establishment message carrying the SRB1 configuration parameter to the terminal.

20. The method of claim 18 or 19, wherein the SRB1 configuration parameter comprises at least one of an SRB1 configuration parameter of a first SRB1 or an SRB1 configuration parameter of a second SRB1, the first SRB1 is arranged to transmit signaling and the second SRB1 is arranged to transmit data.

21. The method of claim 20, wherein the SRB1 configuration parameter comprises at least one of: an SRB1 identifier, the logical channel configuration parameter or the RLC configuration parameter.

22. The method of claim 21, wherein the logical channel configuration parameter comprises at least one of a priority bit rate or a token bucket size time.

23. The method of claim 21, wherein the RLC configuration parameter comprises a maximum number of RLC retransmission times which is larger than 32.

24. A device for data transmission, applied to a terminal and comprising:
a first transmitting module, arranged to transmit a radio connection reestablishment request message to a network device; and
a second transmitting module, arranged to transmit a radio connection reestablishment completion message to the network device according to a radio connection reestablishment message received from the network device,
wherein the radio connection reestablishment completion message, the radio connection reestablishment request message and the radio connection reestablishment message meet at least one of the following conditions:
the radio connection reestablishment completion message carries uplink data;
the radio connection reestablishment request message carries first security information; or
the radio connection reestablishment message carries at least one of second security information or indication information indicating that the second security information is invalid.

25. The device of claim 24, wherein the first security information is a short message integrity verification code; and the second security information is a NextHoppingCount.

26. The device of claim 24, further comprising: a first setting module, arranged to:
when the terminal activates Access Stratum, AS, security, set the first security information according to a related AS security mechanism; or
when the terminal does not activate AS security, set the first security information to be a preset value.

27. The device of claim 24, further comprising: a first processing module, arranged to:
when the terminal activates AS security, perform a related security operation with the second security information; or
ignore any operation related to the second security information, in at least one of the following cases: the terminal does not activate AS security, the second security information is set to be the preset value, or the terminal receives the indication information indicating that the second security information is invalid.

28. The device of claim 24, further comprising: a notification module, arranged to, before the first transmitting module transmits the radio connection reestablishment request message to the network device, notify the network device that the terminal supports a radio connection reestablishment function or an AS security function, through indication information in one of the following messages:
a radio connection establishment request message, a radio connection establishment completion message, a terminal capability transmission message, an uplink information transmission message and a non-AS attachment request message.

29. The device of claim 24, wherein the radio connection reestablishment request message carries at least one of small data transmission indication information or a cause for triggering the current radio connection reestablishment request.

30. The device of claim 24 or 29, wherein the radio connection reestablishment message carries a Signaling Radio Bearer 1, SRB1, configuration parameter.

31. A device for data transmission, applied to a network device and comprising:
a first receiving module, arranged to receive a radio connection reestablishment request message transmitted by a terminal;
a third transmitting module, arranged to transmit a radio connection reestablishment message to the terminal; and
a second receiving module, arranged to receive a radio connection reestablishment completion message transmitted by the terminal according to a radio connection reestablishment message,
wherein the radio connection reestablishment completion message, the radio connection reestablishment request message and the radio connection reestablishment message meet at least one of the following conditions:
the radio connection reestablishment completion message carries uplink data;
the radio connection reestablishment request message carries first security information; and
the radio connection reestablishment message carries at least one of second security information or indication information indicating that the second security information is invalid.

32. The device of claim 31, wherein the first security information is a short message integrity verification code; and the second security information is a NextHoppingCount.

33. The device of claim 31, further comprising: a second processing module, arranged to:
when Access Stratum, AS, security is activated between the network device and the terminal, perform a related operation with the first security information; or
when AS security is not activated between the network device and the terminal, ignore any operation related to the first security information.

34. The device of claim 31, further comprising: a second setting module, arranged to:
when AS security is activated between the network device and the terminal, set the second security information; or
when AS security is not activated between the network device and the terminal, execute at least one of the following operations: setting the second security information to be a preset value or setting the indication information indicating that the second security information is invalid.

35. The device of claim 31, further comprising: a learning module, arranged to, before the first receiving module receives the radio connection reestablishment request message, learn that the terminal supports a radio connection reestablishment function or supports an AS security function, through indication information in one of the following messages:
a radio connection establishment request message, a radio connection establishment completion message, a terminal capability transmission message, an uplink information transmission message and a non-AS attachment request message.

36. The device of claim 31, wherein the radio connection reestablishment request message carries at least one of small data transmission indication information or a cause for triggering the current radio connection reestablishment request.

37. The device of claim 31 or 36, wherein the radio connection reestablishment message carries a Signaling Radio Bearer 1, SRB1, configuration parameter.

38. A method for data transmission, comprising:
transmitting, by a terminal, a radio connection reestablishment request message to a network device;
transmitting, by the network device, a radio connection reestablishment message to the terminal according to the radio connection reestablishment request message; and
transmitting, by the terminal, a radio connection reestablishment completion message to the network device according to the radio connection reestablishment message,
wherein the radio connection reestablishment completion message, the radio connection reestablishment request message and the radio connection reestablishment message meet at least one of the following conditions:
the radio connection reestablishment completion message carries uplink data;
the radio connection reestablishment request message carries first security information; or
the radio connection reestablishment message carries at least one of second security information or indication information indicating that the second security information is invalid.

39. The method of claim 38, wherein the radio connection reestablishment request message carries at least one of small data transmission indication information or a cause for triggering the current radio connection reestablishment request.

40. The method of claim 38 or 39, wherein the radio connection reestablishment message carries a Signaling Radio Bearer 1, SRB1, configuration parameter.

41. A system for data transmission, comprising a terminal and a network device, wherein
the terminal is arranged to transmit a radio connection reestablishment request message to the network device;
the network device is arranged to transmit a radio connection reestablishment message to the terminal according to the radio connection reestablishment request message; and
the terminal is further arranged to transmit a radio connection reestablishment completion message to the network device according to the radio connection reestablishment message,
wherein the radio connection reestablishment completion message, the radio connection reestablishment request message and the radio connection reestablishment message meet at least one of the following conditions:
the radio connection reestablishment completion message carries uplink data;
the radio connection reestablishment request message carries first security information; or
the radio connection reestablishment message carries at least one of second security information or indication information indicating that the second security information is invalid.

42. The system of claim 41, wherein the radio connection reestablishment request message carries at least one of small data transmission indication information or a cause for triggering the current radio connection reestablishment request.

43. The system of claim 41 or 42, wherein the radio connection reestablishment message carries a Signaling Radio Bearer 1, SRB1, configuration parameter.

44. A computer-readable storage medium, on which computer-executable instructions are stored, the computer-executable instructions being executed to implement the steps of the method of any one of claims 1-9 or implement the steps of the method of any one of claims 10-23.
